# EUROPÄISCHE PATENTSCHRIFT

(11) **EP 4 107 014 B1**
(45) Veröffentlichungstag und Bekanntmachung des Hinweises auf die Patenterteilung: **27.03.2024**
(21) Anmeldenummer: 21703818.1
(22) Anmeldetag: 21.01.2021
(51) Int. Cl.: B60C 23/00, F16C 41/00, F16C 19/54, F16C 33/80, F16L 27/087, B60B 27/02, F16C 33/78

(54) **RADNABEN-WÄLZLAGERANORDNUNG MIT EINER ABGEDICHTETEN DREHDURCHFÜHRUNG EINER DRUCKLUFTVERSORGUNGSLEITUNG EINES KRAFTFAHRZEUGREIFENS**
WHEEL HUB ROLLING BEARING ASSEMBLY WITH A SEALED ROTATIONAL JOINT OF THE PRESSURISED AIR SUPPLY LINE OF A MOTOR VEHICLE TIRE
ENSEMBLE DE ROULEMENT ET MOYEU DE ROUE AVEC UN JOINT TOURNANT ÉTANCHE D'UN CIRCUIT D'ALIMENTATION D'AIR COMPRIMÉ D'UN PNEU DE VÉHICULE AUTOMOBILE

(30) Priorität: 17.02.2020 DE 102020104042
(43) Veröffentlichungstag der Anmeldung: 28.12.2022
(73) Patentinhaber: Schaeffler Technologies AG & Co. KG, 91074 Herzogenaurach (DE)
(72) Erfinder: SCHÄFER, Marc-André, 97532 Üchtelhausen (DE); BARTHEL, Bernd, 97508 Grettstadt (DE)
(86) Internationale Anmeldenummer: PCT/DE2021/100063
(87) Internationale Veröffentlichungsnummer: WO 2021/164810

(56) Entgegenhaltungen:
- WO-A1-2012/084412
- WO-A1-2012/084690
- WO-A1-2017/152996
- DE-A1-102004 021 161
- DE-A1-102006 047 840
- DE-A1-102018 100 750
- DE-A1-102018 100 751
- DE-B3-102014 108 028
- FR-A1- 2 714 943

## Beschreibung

Die Erfindung betrifft ein Radlager zur Lagerung eines Kraftfahrzeugreifens eines Kraftfahrzeugs, mit dessen Hilfe in dem Radlager eine Drehdurchführung ausgebildet werden kann, um in radialer Richtung ein Druckfluid durch das Radlager hindurchzuleiten, insbesondere um einen Reifendruck eines Reifens des Kraftfahrzeugs einzustellen.

Die Reifen von Kraftfahrzeugen haben je nach Untergrund und nach Beladung einen unterschiedlichen, optimalen Reifendruck. Beispielsweise bei losem Untergrund, Sand, Matsch oder ähnliches wird eine möglichst gute Traktion benötigt, die mit einem Reifen mit einem sehr geringen Reifendruck erreicht werden kann. Auf einem ebenen Untergrund wie beispielsweise einer Landstraße ist auch bei einem höheren Reifendruck eine ausreichende Traktion erreicht, wobei ein Reifen mit einem hohen Reifendruck zu weniger Reibung und einem geringeren Spritverbrauch führt. Für einen voll beladenen Lastkraftwagen fällt der optimale Reifendruck höher aus als für eine Leerfahrt. Lastkraftwagen, die im Gelände oder auf Baustellen fahren, wie beispielsweise einem Kipper, sind in der Regel entweder vollkommen leer oder komplett beladen unterwegs, so dass insbesondere für solche Lastkraftwagen der Unterschied zwischen den jeweils optimalen Reifendrücken besonders groß ist.

Aus DE 10 2018 100 751 A1 ist ein Radlager zur Lagerung eines Kraftfahrzeugreifens eines Kraftfahrzeugs bekannt, bei dem zwischen zwei Dichteinheiten einer Drehdurchführung eine Druckkammer zum Anpressen von Dichtlippen der Dichteinheiten an einen relativ drehbaren Ring vorgesehen ist, wobei an der von der Druckkammer weg weisenden Axialseite der Dichteinheiten jeweils ein Wälzlager vorgesehen ist, an dem sich die jeweilige Dichteinheit gegebenenfalls über einen an dem relativ drehbaren Ring dichtend anliegenden Staubschutzdeckel axial abstützen kann. WO 2017 152 996 offenbart auch Radlager zur Lagerung eines Kraftfahrzeuges und wird als nächstliegender Stand der Technik angesehen.

Es besteht ein ständiges Bedürfnis die Lebensdauer einer Drehdurchführung für ein Radlager zu erhöhen.

Es ist die Aufgabe der Erfindung Maßnahmen aufzuzeigen, die eine hohe Lebensdauer für eine Drehdurchführung für ein Radlager zu ermöglichen.

Die Lösung der Aufgabe erfolgt erfindungsgemäß durch ein Radlager mit den Merkmalen des Anspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Erfindungsgemäß ist ein Radlager zur Lagerung eines Kraftfahrzeugreifens eines Kraftfahrzeugs, insbesondere Lastkraftfahrzeug, vorgesehen mit einem, insbesondere als Innenlagerring ausgestalteten, ersten Ring, einem, insbesondere als Außenlagerring oder Nabe ausgestalteten, relativ zum ersten Ring über mindestens ein gefettetes Wälzlager drehbar gelagerten zweiten Ring, einer in radialer Richtung zwischen dem ersten Ring und dem zweiten Ring angeordneten Dichteinheit zum Abdichten des ersten Rings gegenüber dem zweiten Ring, einer in radialer Richtung zwischen dem ersten Ring und dem zweiten Ring angeordneten weiteren Dichteinheit zum Abdichten des ersten Rings gegenüber dem zweiten Ring, und einer in radialer Richtung zwischen dem ersten Ring und dem zweiten Ring und in axialer Richtung zwischen der Dichteinheit und der weiteren Dichteinheit ausgebildeten Druckkammer, wobei in axialer Richtung zwischen dem Wälzlager und der Dichteinheit ein Stützring zur axialen Abstützung der Dichteinheit bei einem Druck in der Druckkammer angeordnet ist, wobei der Stützring zwischen dem Stützring einerseits und dem relativ zum Stützring drehbaren ersten Ring oder zweiten Ring andererseits einen zum Zurückhalten von Schmierfett des Wälzlagers dimensionierten Luftspalt ausbildet.

Um für die Wälzlager eine hohe Lebensdauer zu erreichen, sind die Wälzlager mit einem Schmierfett geschmiert. Grundsätzlich kann Schmierfett im Bereich der jeweiligen Dichteinheit, insbesondere zwischen einer Dichtlippe und dem relativ zu dieser Dichtlippe drehbaren Ring, die Reibung und damit den Verschleiß reduzieren, so dass eine erhöhte Lebensdauer der Dichteinheiten zu erwarten wäre. Jedoch wurde erkannt, dass bei den auftretenden Relativdrehzahlen und dem Anpressdruck so hohe Temperaturen an der Dichtstelle der Dichteinheit auftreten können, dass sich die Kohlenwasserstoffe im Schmierfett zersetzen und eine karbonisierte Schicht an der Dichtstelle erzeugen, die zu einem erhöhten Verschleiß und einer reduzierten Lebensdauer führen können. Durch den Stützring kann ein verschleißbehaftetes axiales Verrutschen der jeweiligen Dichteinheit vermieden oder zumindest begrenzt werden. Gleichzeitig kann der von dem Stützring freigelassene Luftspalt zwischen dem Stützring und dem relativ drehbaren Ring eine Labyrinthdichtung ausbilden. Der Luftspalt kann so schmal sein, dass zumindest das Schmierfett aus dem Wälzlager zurückhalten werden kann und nicht an die Dichtstelle der Dichteinheit gelangen kann. Gleichzeitig kann der Luftspalt so breit sein, dass unter Berücksichtigung sämtlicher Toleranzen ein reibungsbehafteter und verschleißintensiver Kontakt mit dem relativ drehbaren Ring sicher vermieden ist. Da das Schmierfett vergleichsweise zähflüssig ist, kann ein in radialer Richtung entsprechend breiter Luftspalt zu gelassen werden, so dass für einen den Luftspalt begrenzenden Durchmesser des Stützrings eine entsprechend große und kostengünstige Toleranz zugelassen werden kann. Wenn eine Dichtlippe der jeweiligen Dichteinheit von einem ansteigenden Überdruck in der Druckkammer an den relativ drehbaren Ring angepresst wird, kann durch die elastische Verformung der Dichteinheit an der von der Druckkammer weg weisenden Axialseite der Dichteinheit Luft verdrängt werden, die über den von dem Stützring freigelassenen Luftspalt entweichen kann. Die entweichende Luft kann an dem Luftspalt anliegendes Schmierfett zurück in das Wälzlager drücken und über einen Entlüftungskanal des Wälzlagers abgeführt werden. Dadurch kann eine an der Dichteinheit vorbeigelangte Luftleckage sogar die Schmierung und die Lebensdauer des zugeordneten Wälzlagers unterstützen. Durch den Stützring kann eine verschleißerhöhende karbonisierte Schicht durch Schmierfett des Wälzlagers vermieden werden, so dass eine hohe Lebensdauer für eine Drehdurchführung für ein Radlager zu ermöglicht ist.

Es ist möglich, dass nur an einem der Dichteinheiten der Stützring vorgesehen ist. In einer bevorzugten Ausführungsform ist in axialer Richtung zwischen der weiteren Dichteinheit und einem weiteren Wälzlager ein weiterer Stützring zur axialen Abstützung der weitreren Dichteinheit bei einem Druck in der Druckkammer angeordnet, wobei der weitere Stützring zwischen dem weiteren Stützring einerseits und dem relativ zum weiteren Stützring drehbaren ersten Ring oder zweiten Ring andererseits einen zum Zurückhalten von Schmierfett des weiteren Wälzlagers dimensionierten Luftspalt ausbildet. Der weitere Stützring kann insbesondere analog, vorzugsweise symmetrisch zum Stützring ausgestaltet sein, so dass alle unter Bezugnahme auf den Stützring getätigten Aussagen analog für den weiteren Stützring in seinem Zusammenwirken mit der weiteren Dichteinheit und dem weiteren Wälzlager gelten. Zusätzlich zu dem zwischen der Dichteinheit und dem Wälzlager vorgesehenen Stützring kann zwischen der weiteren Dichteinheit und dem weiteren Wälzlager der weitere Stützring vorgesehen sein. Der Stützring und der weitere Stützring können als identische Gleichteile ausgestaltete sein, die spiegelbildlich zueinander verbaut werden können. Entsprechend können die Dichteinheit und die weitere Dichteinheit und/oder das Wälzlager und das weitre Wälzlager als identische Gleichteile ausgestaltete sein, die spiegelbildlich zueinander verbaut werden können.

Der Stützring kann insbesondere in radialer Richtung sich soweit erstrecken, dass die Dichteinheit über einen Großteil ihrer radialen Erstreckung an dem Stützring anliegen kann. An der Dichtstelle zwischen der Dichteinheit und dem zur Dichteinheit relativ drehbaren Ring auftretende Reibungswärme kann dadurch über eine große Kontaktfläche an den Stützring abgeführt werden, wodurch ein Überhitzen der Dichteinheit vermieden werden kann. Die von dem Stützring aufgenommene Wärme kann beispielsweise über natürliche Konvektion und/oder Wärmeleitung, beispielsweise an das Wälzlager und/oder mindestens einem der Ring, angeführt werden.

Die Druckkammer kann in radialer Richtung durch den ersten Ring und den relativ zum ersten Ring drehbaren zweiten Ring und in axialer Richtung durch die Dichteinheit und die weitere Dichteinheit begrenzt sein. Hierbei kann der erste Ring einen mit der Druckkammer kommunizierenden Einlass zum Anschluss einer Druckquelle und der zweite Ring einen mit der Druckkammer kommunizierenden Auslass zum Anschluss eines Drucknutzraums, insbesondere Reifenschlauch eines Kraftfahrzeugreifens, aufweisen, wodurch eine Drehdurchführung ausgebildet wird, um ein Druckfluid durch die relativ zueinander drehbaren Ringe hindurchzuleiten. Wenn das Druckfluid in der Druckkammer den Druck erhöht, kann der sich erhöhende Druck auch an der Dichtlippe angreifen. Vorzugsweise ist vorgesehen, dass die Dichtlippe jedoch nicht eine ausschließlich in einer Radialebene liegende Stirnseite aufweist, sondern dass die Dichtlippe zumindest in einem Teilbereich zu der Radialebene angeschrägt ist.

Dadurch führt der an der Dichtlippe abgreifende Druck der Druckkammer auch zu einem in radialer Richtung wirkenden Kraftanteil. Dieser Kraftanteil kann die Dichtlippe, insbesondere eine Dichtkante der Dichtlippe, gegen eine relativ zu der Dichtlippe drehbare Dichtfläche drücken, so dass sich eine von dem Druck in der Druckkammer abhängige Dichtwirkung der Dichtlippe ergibt. Bei einem hohen Druck in der Drucckammer kann die Dichtlippe mit einer höheren Kraft angepresst werden, so dass eine ausreichend hohe Dichtwirkung erreicht wird, um auch bei einem hohen Druck eine Leckage zu vermeiden. Bei einem niedrigen Druck in der Druckkammer ergibt sich eine geringere Dichtwirkung, die immer noch ausreicht eine Leckage zu vermeiden aber aufgrund der geringeren Anpresskraft einem geringeren Verschleiß unterliegt. Durch abrasiven Verschleiß und/oder durch thermische Belastung verursachte Verschleißeffekte können dadurch zumindest reduziert werden. Die Dichteinheiten können bei der Montage leicht zwischen dem ersten Ring und dem zweiten Ring aufgesteckt werden, so dass eine einfache Montage gegeben ist. Durch die von dem Druck in der Drucckammer mit einem Anteil in radialer Richtung gegen eine Dichtfläche pressbare Dichtlippe der einfach zwischen die Ringe eingesetzten Dichteinheiten kann eine automatisch an den Druck in der Druckkammer angepasste Dichtwirkung bereitgestellt werden, so dass eine leicht montierbare Drehdurchführung für ein Radlager mit einer geringen Leckage ermöglicht ist.

Die radiale Anpresskraft der Dichtlippe hängt von dem Druck in der Druckkammer ab. Die Abhängigkeit der Anpresskraft von dem Druck kann beispielsweise eingestellt werden, indem beispielswiese eine Anschrägung der Dichtlippe zu einer Radialebene, eine Größe eines dem Druck der Druckkammer ausgesetzten Flächenbereichs der Dichtlippe, eine Elastizität der Dichtlippe und/oder eine elastische Vorspannung der Dichtlippe gegen die Dichtfläche geeignet gewählt wird.

Der erste Ring kann in axialer Richtung länger ausgestaltet sein, als dies zur Lagerung der Ringe mit Hilfe der Wälzlager erforderlich ist. Dadurch können die Dichteinheiten leicht auf den ersten Ring aufgesteckt sein. Wenn der erste Ring als Innenring des Wälzlagers ausgestaltet ist, sind die Dichteinheiten radial außerhalb zum ersten Ring angeordnet. Wenn der erste Ring als Außenring des Wälzlagers ausgestaltet ist, sind die Dichteinheiten radial innerhalb zum ersten Ring angeordnet. Die Dichteinheiten können in axialer Richtung neben den Wälzkörpern des Radlagers angeordnet sein. Zur Montage des Radlagers können die Dichteinheiten zunächst auf den ersten Ring aufgesteckt werden und danach in eine Nabe, insbesondere Radnabe eines Kraftfahrzeugreifens, eingeführt werden. Die Nabe ist insbesondere aus Gusseisen hergestellt.

Zwischen der Dichtlippe und der Dichtfläche kann im laufenden Betrieb eine Relativdrehung stattfinden, die insbesondere an einer Dichtkante der Dichtlippe zu einem abrasiven Verschleiß führen kann. Durch die Elastizität der Dichtlippe kann der Verschleiß automatisch nachgestellt werden, indem die Dichtlippe von dem Druck in der Druckkammer um das Ausmaß des Verschleißes weiter auf die Dichtfläche zu verformt wird. Eine durch Verschleißeffekte der Dichtlippe verursachte Leckage des Druckfluids an der Dichtkontaktstelle zwischen der Dichtlippe und der Dichtfläche vorbei kann dadurch vermieden werden. Das für die Dichteinheit verwendete mindestens eine Material ist insbesondere hitzebeständig bis zu einer Temperatur von beispielsweise 260°C. Das Material weist insbesondere eine Dehnbarkeit auf, die ausreichend ist, um gegen im Betrieb zu erwartende Stöße unempfindlich zu sein. Beispielsweise weist das jeweilige Material eine Dehnung von 5% bis 10% auf. Der thermische Ausdehnungskoeffizient des jeweiligen Materials entspricht insbesondere im Wesentlichen dem thermischen Ausdehnungskoeffizient des für die Ringe des Radlagers verwendeten Materials, insbesondere Stahl.

Beispielsweise ist ein Innenring des Radlagers mit einer Hohlwelle verbunden, über welche die Druckquelle oder der Drucknutzraum angeschlossen sein kann. Die Hohlwelle kann hierzu beispielsweise eine Querbohrung aufweisen, die insbesondere über eine in der Hohlwelle und/oder in dem Innenring ausgebildete in Umfangsrichtung umlaufende Nut mit der Druckkammer kommunizieren kann. Der Außenring des Radlagers kann mit einer Nabe verbunden sein oder die Nabe ausbilden. Die Nabe kann insbesondere eine Radnabe ausbilden, mit der ein Reifen des Kraftfahrzeugs verbunden sein kann. Die Dichteinheiten können mit einem der Lagerringe des Radlagers über ein Dichtelement, insbesondere eine O-Ring-Dichtung oder ein mit Gummi umspritztes Blechumformteil, drehfest und fluiddicht verbunden sein. Die Dichteinheiten können auch einen Haltering zur Aufnahme der Dichtlippe aufweisen, der dichtend in einem der Ringe eingepresst sein kann. Die Dichteinheiten sind insbesondere konzentrisch zu der Drehachse des Radlagers angeordnet. Die Drehachse des Radlagers fällt mit der Drehachse der Dichteinheiten zusammen. Insbesondere ist für die Dichtkontaktstelle zwischen der Dichtlippe und der Dichtfläche keine Schmierung vorgesehen, so dass eine trockene Abdichtung ausgebildet ist. Vorzugsweise ist die Dichtfläche drallfrei ausgeführt und/oder weist eine gehonte Oberfläche auf.

Das Radlager kann für verschiedene Anwendungen auch außerhalb einer Anwendung als Radlager für einen Reifen eines Kraftfahrzeugs verwendet werden. Für viele Einsatzgebiete ist es ausreichend, wenn der Innendurchmesser eines der Wälzlager des zumindest zweireihigen Radlagers oder einreihigen Radlagers zwischen einschließlich 50 mm und einschließlich 160 mm liegt, wobei insbesondere der Außendurchmesser des Wälzlager zwischen einschließlich 90 mm und einschließlich 230 mm liegt. Vorzugsweise liegt die axiale Breite des Wälzlager zwischen einschließlich 81 mm und einschließlich 116 mm. Die radiale Erstreckung des Radlagers ist dadurch groß genug, um die Dichteinheiten aufzunehmen und die Dichteinheiten noch kostengünstig fertigen und montieren zu können. Wenn für die zwei Wälzlager ein gemeinsamer Lagerring verwendet wird, kann eine entsprechend doppelt so große axiale Breite für den für beide Wälzlager vorgesehenen Lagerring vorgesehen sein. Zur leichteren Montage kann der Lagerring eine etwas größer bemessene axiale Breite aufweisen, die beispielsweise zwischen einschließlich 165 mm und einschließlich 250 mm liegt.

Die Dichteinheit kann zur Abdichtung in einer ersten Axialrichtung vorgesehen sein, während die weitere Dichteinheit zur Abdichtung in einer entgegengesetzten Axialrichtung vorgesehen ist. Die Dichteinheiten können zueinander symmetrisch, spiegelbildlich und/oder analog ausgestaltet sein.

Insbesondere weist der Stützring an der zum Wälzlager weisenden Axialseite eine, insbesondere im Wesentlichen radial verlaufende, Entlüftungsnut auf. Dadurch kann an der Dichtlippe der Dichteinrichtung vorbei gelangte Leckageluft, die zwischen der Dichteinrichtung und dem Wälzlager eingesperrt ist, über die Entlüftungsnut entweichen. Ein sich aufbauender Gegendruck an der von der Druckkammer weg weisenden Rückseite der Dichtlippe beziehungsweise der Dichteinheit kann dadurch vermieden werden, so dass die Dichtwirkung der Dichteinheit nicht durch eigesperrte Leckageluft beeinträchtigt wird. Die Entlüftungsnut des Stützrings kann mit einer in dem ersten Ring und/oder in dem zweiten Ring vorgesehenen Öffnung kommunizieren, um die Leckageluft abzuführen.

Vorzugsweise kommuniziert der Luftspalt mit einem mit dem Wälzlager kommunizierenden Entlüftungskanal. Die zwischen dem Stützring und dem Wälzlager ansonsten eingesperrte Leckageluft, kann über den Entlüftungskanal des Wälzlagers abgelassen werden, so dass die Leckageluft an dem Luftspalt zurückgehaltenes Schmierfett des Wälzlagers zurück in das Wälzlager fördern kann.

Besonders bevorzugt weist der erste Ring oder der zweite Ring einen Absatz zur Aufnahme des Stützrings auf, wobei die axiale Erstreckung des Absatzes größer als die axiale Erstreckung des Stützrings ist. Falls das Wälzlager eine Axialkraft erfahren sollte, die auf den Stützring gerichtet ist, kann das Wälzlager den Stützring allenfalls weiter in den Absatz hineindrücken, bevor das Wälzlager axial an dem den Absatz ausbildenden Ring anschlägt. Dadurch braucht der Stützring nicht dafür ausgelegt zu sein Axialkräfte des Wälzlagers aufzunehmen. Der Stützring kann mit einer Spielpassung in axialer Richtung in dem Absatz aufgenommen sein. Die axiale Abstützung des Wälzlagers erfolgt über den ersten Ring und/oder den zweiten Ring, jedoch nicht über den Stützring. Der Stützring braucht dadurch nur für deutlich geringere Lasten ausgelegt zu sein, wodurch eine kostengünstige Herstellung des Stützrings ermöglicht wird.

Insbesondere weist der Stützring einen an dem mit dem Stützring mitdrehenden ersten Ring oder zweiten Ring anschlagbaren Vorsprung auf, wobei ein Teil des Wälzlagers zu dem Vorsprung radial versetzt in einem gemeinsamen Axialbereich mit dem Vorsprung angeordnet ist, wenn der Vorsprung an dem mit dem Stützring mitdrehenden ersten Ring oder zweiten Ring anliegt. Der Stützring kann insbesondere ein L-förmiges Querschnittsprofil aufweisen, wobei der durch den Vorsprung ausgebildete kurze Schenkel des Ls auf einen Lagerring des Wälzlagers zu weisen kann. Der längere Schenkel des Ls kann flächig an einer Axialseite der Dichteinheit anliegen, um eine Wärmeabfuhr aus der Dichteinheit zu begünstigen. Eine axiale Verlagerung der Dichteinheit und des Stützrings kann durch das axiale Anschlagen des Vorsprungs des Stützrings an dem Lagerring des Wälzlagers begrenzt sein. Gleichzeitig wird radial innerhalb oder radial außerhalb in dem Axialbereich des Vorsprungs Bauraum freigelassen, in dem ein Teil des Wälzlagers, beispielsweise ein Lagerkäfig des Wälzlagers, eintauchen kann. Der axiale Bauraumbedarf wird dadurch gering gehalten.

Vorzugsweise weist die Dichteinheit eine unter Überdruck, insbesondere nur bei einem Überdruck von über 0,5 bar, in der Druckkammer an einer Dichtfläche anliegbare Dichtlippe auf, wobei die Dichtfläche konisch ausgeformt ist und sich von der Drucckammer weg erweitert. Durch die konische Dichtfläche ist die Dichtwirkung der Dichteinheit an der Dichtfläche bei einem ansteigenden Überdruck selbstverstärkend. Bei einem niedrigen Druck, insbesondere bei einem Ablassen des Drucks, ist es sogar möglich, dass die Dichtlippe von der Dichtfläche abheben kann und eine unnötige Reibung vermieden ist. Bei einem ansteigenden Druck kann die Dichtwirkung aufgrund der angeschrägten Dichtfläche überproportional ansteigen, so dass die Menge an Leckageluft minimiert werden kann.

Besonders bevorzugt sind der Stützring und die Dichteinheit in axialer Richtung geringfügig, insbesondere um 1,0 mm bis 2,0 mm, verschiebbar ausgeführt. Insbesondere wenn eine von dem relativ drehbaren ersten Ring oder von dem relativ drehbaren zweiten Ring ausgebildete Dichtfläche konisch ausgeführt ist, kann dadurch ein abrasiver Verschleiß der Dichtlippe der Dichteinheit kompensiert werden, so dass die Dichtwirkung über die Lebensdauer der Drehdurchführung des Radlagers erhalten bleibt.

Insbesondere ist die Dichteinheit, insbesondere die Dichtlippe, aus PTFE oder PTFE mit einem Glasfaseranteil oder PTFE mit einem Karbonfaseranteil hergestellt. Die Dichtlippe der Dichteinheit ist dadurch elastisch genug, um von dem Überdruck in der Druckkammer ab die Dichtfläche angepresst zu werden. Gleichzeitig ist die Dichtlippe der Dichteinheit verschleißfest genug, um über einer langen Lebensdauer hinweg eine ausreichende Dichtwirkung beizubehalten.

Vorzugsweise kommuniziert die Druckkammer mit einem in einer Radnabe vorgesehenen Luftzufuhrkanal und einem Reifenschlauch eines Kraftfahrzeugreifens, wobei die Radnabe den ersten Ring ausbildet und der Luftzufuhrkanal mindestens ein, insbesondere als O-Ring ausgestaltetes, Dichtelement zur Abdichtung des Luftzufuhrkanals gegenüber einem Luftanschluss und/oder Abdichtdeckel aufweist. Durch das insbesondre kostengünstige Dichtelement kann eine Abdichtung gegen Öl erreicht werden, wodurch eine ansonsten erforderliche Mitteldichtung eingespart werden kann.

Besonders bevorzugt ist zwischen der Dichteinheit und dem Stützring eine Leckagerückführung ausgebildet, wobei insbesondere die Dichteinheit mindestens eine axial verlaufender Leckagenut und der Stützring mindestens eine mit der Leckagenut kommunizierende Ablaufnut aufweist. Dadurch können auch Verunreinigungen in dem Druckfluid, das als Leckage die Dichteinheit passieren konnte, nicht die Wälzlager erreichen. Insbesondere kann mit Hilfe des Stützrings ein Strömungsweg für den Leckagestrom des Druckfluids vorgegeben werden, der in der Art einer Labyrinthdichtung eine 180°-Kehre vorsieht, beispielsweise von radial nach innen nach radial außen oder umgekehrt. Dadurch kann die Leckage oder zumindest die schwereren Verunreinigungen des Leckagestroms in der 180°-Kehre zurückgehalten und gesammelt werden. Vorzugsweise ist an dieser Kehre ein Sammelraum zur Sammlung und Rückführung von als Leckage an dem Dichtkontakt vorbeigeströmten Druckfluid vorgesehen. Der Sammelraum kann in einem Lagerring des Radlagers ausgebildet werden oder über einen in dem Lagerring des Radlagers ausgebildet Kanal erreicht werden. Dadurch kann sichergestellt werden, dass ein Leckagestrom oder Verunreinigungen in dem Leckagestrom nicht die Wälzkörper erreichen. Vorzugsweise kann das in dem Sammelraum gesammelte Druckfluid wieder rückgeführt werden, wodurch der Sammelraum zu einem Großteil geleert werden kann und auch nach einer langen Betriebszeit noch einen Leckagestrom zumindest zeitweise aufnehmen kann. Geeignete Leckagerückführungen sind in DE 10 2006 006 143 A1 und/oder US 7 997 316 B1 beschrieben, auf deren Inhalt als Teil der Erfindung hiermit Bezug genommen wird.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Schnittansicht einer ersten Ausführungsform eines Radlagers,
Fig. 2: eine schematische Detailansicht des Radlagers aus Fig. 1,
Fig. 3: eine schematische perspektivische Ansicht eines Stützrings des Radlagers aus Fig. 2,
Fig. 4: eine schematische Schnittansicht des Stützrings aus Fig. 3,
Fig. 5: eine schematische Detailansicht einer alternative Ausgestaltung des Radlagers aus Fig. 1 und
Fig. 6: eine schematische Schnittansicht einer weiteren Ausführungsform eines Radlagers.

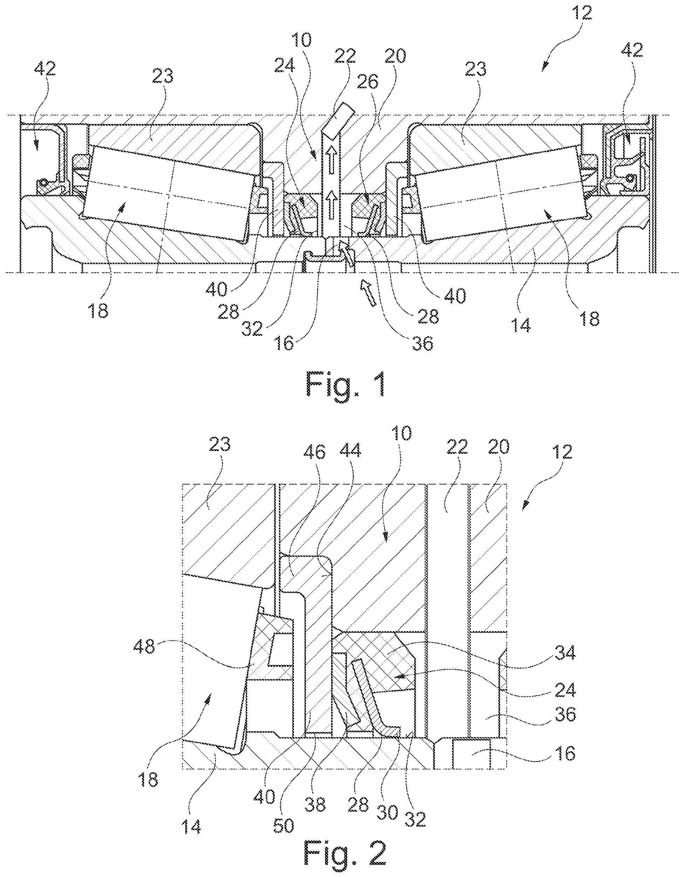

Die in Fig. 1 dargestellte Drehdurchführung 10 kann beispielsweise von einer radial innen angeschlossenen Druckquelle ein insbesondere als Druckluft vorliegendes Druckfluid durch ein Radlager 12 eines Kraftfahrzeugs hindurch in einen radial äußeren Drucknutzraum leiten, bei dem es sich um einen Reifenschlauch eines Kraftfahrzeugreifens handeln kann, um den für unterschiedliche Randbedingen jeweils unterschiedlichen optimalen Reifendruck einstellen zu können. Die Drehdurchführung 10 weist hierzu einen ersten Ring 14 auf, der einen in radialer Richtung verlaufenden Einlass 16 aufweist, über den der von der Druckquelle bereitgestellte Druck angelegt werden kann. Der erste Ring 14 kann hierbei durch den Innenring des Radlagers 12 ausgebildet sein. Das Radlager 12 ist beispielsweise zweireihig ausgestaltet ist und kann insbesondere zwei separate Wälzlager 18 aufweisen, die einen gemeinsamen Innenring oder separate Innenringe aufweisen. Die separaten Innenringe können insbesondere an ihren aufeinander zu weisenden Axialseiten jeweils eine Aussparung aufweisen, um gemeinsam den Einlass 16 auszubilden. Es ist auch möglich den Einlass 16 in nur genau einem der ersten Ringe 14 vorzusehen. Die Drehdurchführung 10 weist zudem einen zu dem ersten Ring 14 relativ drehbaren zweiten Ring 20 auf, der einen in radialer Richtung verlaufenden Auslass 22 aufweist, um das Druckfluid in den Drucknutzraum zu leiten. Der zweite Ring 20 kann hierbei durch einen Außenring 23 des Radlagers 12 oder separat zum Außenring 23 ausgebildet sein. Analog zum ersten Ring 14 kann auch der zweite Ring 20 durch separate Außenringe 23 der einzelnen Wälzlager 18 des mehrreihigen Radlagers 12 ausgebildet sein, wobei insbesondere die separaten Außenringe 23 an ihren aufeinander zu weisenden Axialseiten jeweils eine Aussparung aufweisen können, um gemeinsam den Auslass 22 auszubilden. Der zweite Ring 14 kann auch separat zu den Außenringen 23 des Radlagers 12 ausgestaltet sein und beispielsweise durch eine Nabe für den Reifen ausgebildet sein.

Um den ersten Ring 14 und den zweiten Ring 20 möglichst dicht und verschleißarm gegeneinander abzudichten, weist die Drehdurchführung 10 eine in radialer Richtung zwischen dem ersten Ring 14 und dem zweiten Ring 20 angeordnete Dichteinheit 24 und eine weitere Dichteinheit 26 auf. Die im dargestellten Ausführungsbeispiel sind die Dichteinheiten 24, 26 spiegelbildlich zueinander ausgestaltet. Die Dichteinheiten 24, 26 sind mit dem zweiten Ring 20 dichtend verbunden. Zwischen den Ringen 14, 20 und den Dichteinheiten 24, 26 ist eine Druckkammer 36 ausgebildet, mit welcher der Einlass 16 und der Auslass 22 kommuniziert. Die Dichteinheiten 24, 26 weisen jeweils eine elastische Dichtlippe 28 auf, die durch den Druck in der Druckkammer 36 mit ihrer Dichtkante 30 gegen eine von dem ersten Ring 14 ausgebildete Dichtfläche 32 gepresst werden kann, wie in Fig. 2 dargestellt ist. Die Dichtlippe 28 kann beispielsweise in einem Dichtring 34 aufgenommen sein, der wiederum durch einen Stützkörper 38 verstärkt sein kann. Der Stützkörper 38 kann ein axiales Nachgeben der Dichtlippe 28 blockieren und sich axial an einem Stützring 40 abstützen. Ein Eindringen von äußeren Verschmutzungen in das Wälzlager 18 kann durch einen beispielsweise als Kassettendichtung ausgestalteten Dichtkörper 42 vermieden werden, der an dem axialen Außenrand des Wälzlagers 18 zwischen dem Innenring und dem Außenring 23 angeordnet ist.

Der im Querschnitt im Wesentlichen L-förmige Stützring 40 ist in einem Absatz 44 des zweiten Rings 22 mit Spiel in axialer Richtung eingesetzt, so dass der Stützring 40 nicht angreifende Axialkräfte des Wälzlagers 18 abstützen muss. Eine axiale Abstützung des Wälzlagers 18 kann stattdessen über den zweiten Ring 22 erfolgen. Der Stützring 40 weist einen Vorsprung 46 auf, über den die Dichteinheit 24 und der Stützring 40 an dem Außenring 23 des Wälzlagers 18 abgestützt werden können. Gleichzeitig kann ein Teil des Wälzlagers 18, beispielsweise ein Lagerkäfig 48, in einen Bauraum radial innerhalb des Vorsprungs 46 bauraumsparend eintauchen. Zwischen dem Stützring 40 und dem ersten Ring 14 ist ein Luftspalt 50 ausgebildet. Der Luftspalt 50 ist in radialer Richtung groß genug, dass Luft hindurchtreten kann, aber klein genug, um Schmierfett aus dem Wälzlager 18 zurückzuhalten.

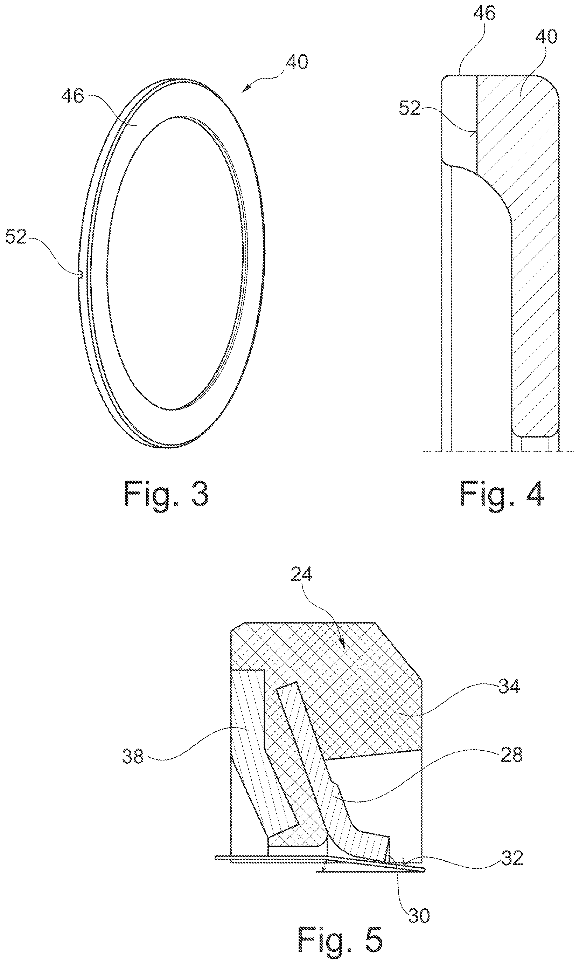

Wie in Fig. 3 und Fig. 4 dargestellt ist, kann in dem Absatz 44 des Stützrings 40 eine Entlüftungsnut 52 vorgesehen sein, über die zwischen der Dichteinheit 24 und dem Wälzlager 18 eingesperrte Leckageluft abgeführt werden kann. Die Entlüftungsnut 52 wiederum kann mit einem Entlüftungskanal in dem Wälzlager, in dem ersten Ring 14 und/oder in dem zweiten Ring 20 kommunizieren.

Wie in Fig. 5 dargestellt, kann die Dichtfläche 32 auch konisch ausgeführt sein, so dass sich bei einem ansteigenden Druck in der Druckkammer 36 eine selbstverstärkende Dichtwirkung ergibt. Zudem kann bei einem abrasiven Verschleiß der Dichtlippe 28 eine ausreichende Dichtwirkung der Dichteinheit 24 über die Lebensdauer erhalten bleiben.

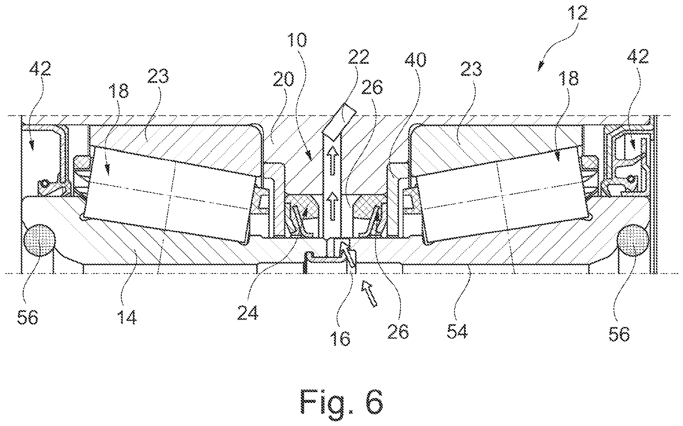

Wie in Fig. 6 dargestellt, kann der erste Ring 14 einen axial verlaufenden Luftzufuhrkanal aufweisen, der an seinen axialen Enden über als O-Ring ausgestaltete Dichtelemente 56 abgedichtet sein kann. Eine Mitteldichtung kann dadurch vermieden werden.

### Bezugszeichenliste

- 10: Drehdurchführung
- 12: Radlager
- 14: erster Ring
- 16: Einlass
- 18: Wälzlager
- 20: zweiter Ring
- 22: Auslass
- 23: Außenring
- 24: Dichteinheit
- 26: weitere Dichteinheit
- 28: Dichtlippe
- 30: Dichtkante
- 32: Dichtfläche
- 34: Dichtring
- 36: Druckkammer
- 38: Stützkörper
- 40: Stützring
- 42: Dichtkörper
- 44: Absatz
- 46: Vorsprung
- 48: Lagerkäfig
- 50: Luftspalt
- 52: Entlüftungsnut
- 54: Luftzufuhrkanal
- 56: Dichtelement

## Patentansprüche

1. Radlager zur Lagerung eines Kraftfahrzeugreifens eines Kraftfahrzeugs, insbesondere Lastkraftfahrzeug, mit
einem, insbesondere als Innenlagerring ausgestalteten, ersten Ring (14),
einem, insbesondere als Außenlagerring oder Nabe ausgestalteten, relativ zum ersten Ring über mindestens ein gefettetes Wälzlager (18) drehbar gelagerten zweiten Ring (20),
einer in radialer Richtung zwischen dem ersten Ring (14) und dem zweiten Ring (20) angeordneten Dichteinheit (24) zum Abdichten des ersten Rings (14) gegenüber dem zweiten Ring (20),
einer in radialer Richtung zwischen dem ersten Ring (14) und dem zweiten Ring (20) angeordneten weiteren Dichteinheit (26) zum Abdichten des ersten Rings (14) gegenüber dem zweiten Ring (20), und
einer in radialer Richtung zwischen dem ersten Ring (14) und dem zweiten Ring (20) und in axialer Richtung zwischen der Dichteinheit (24) und der weiteren Dichteinheit (26) ausgebildeten Druckkammer (36),
**dadurch gekennzeichnet, dass**
in axialer Richtung zwischen dem Wälzlager (18) und der Dichteinheit (24) ein Stützring (40) zur axialen Abstützung der Dichteinheit (24) bei einem Druck in der Drucckammer (36) angeordnet ist,
wobei der Stützring (40) zwischen dem Stützring(40) einerseits und dem relativ zum Stützring (40) drehbaren ersten Ring (14) oder zweiten Ring (20) andererseits einen zum Zurückhalten von Schmierfett des Wälzlagers (18) dimensionierten Luftspalt (50) ausbildet.

2. Radlager nach Anspruch 1 **dadurch gekennzeichnet, dass** der Stützring (40) an der zum Wälzlager (18) weisenden Axialseite eine, insbesondere im Wesentlichen radial verlaufende, Entlüftungsnut (52) aufweist.

3. Radlager nach Anspruch 1 oder 2 **dadurch gekennzeichnet, dass** der Luftspalt (50) mit einem mit dem Wälzlager (18) kommunizierenden Entlüftungskanal kommuniziert.

4. Radlager nach einem der Ansprüche 1 bis 3 **dadurch gekennzeichnet, dass** der erste Ring (14) oder der zweite Ring (20) einen Absatz (44) zur Aufnahme des Stützrings (40) aufweist, wobei die axiale Erstreckung des Absatzes (44) größer als die axiale Erstreckung des Stützrings (40) ist.

5. Radlager nach einem der Ansprüche 1 bis 4 **dadurch gekennzeichnet, dass** der Stützring (40) einen an dem mit dem Stützring (40) mitdrehenden ersten Ring (14) oder zweiten Ring (20) anschlagbaren Vorsprung (46) aufweist, wobei ein Teil des Wälzlagers (18) zu dem Vorsprung (46) radial versetzt in einem gemeinsamen Axialbereich mit dem Vorsprung (46) angeordnet ist, wenn der Vorsprung (46) an dem mit dem Stützring (40) mitdrehenden ersten Ring (14) oder zweiten Ring (20) anliegt.

6. Radlager nach einem der Ansprüche 1 bis 5 **dadurch gekennzeichnet, dass** die Dichteinheit (24) eine unter Überdruck, insbesondere nur bei einem Überdruck von über 0,5 bar, in der Druckkammer (36) an einer Dichtfläche (32) anliegbare Dichtlippe (28) aufweist, wobei die Dichtfläche (32) konisch ausgeformt ist und sich von der Druckkammer (36) weg erweitert.

7. Radlager nach einem der Ansprüche 1 bis 6 **dadurch gekennzeichnet, dass** der Stützring (40) und die Dichteinheit (24) in axialer Richtung geringfügig, insbesondere um 1,0 mm bis 2,0 mm, verschiebbar ausgeführt sind.

8. Radlager nach einem der Ansprüche 1 bis 7 **dadurch gekennzeichnet, dass** die Dichteinheit (24), insbesondere die Dichtlippe (28), aus PTFE oder PTFE mit einem Glasfaseranteil oder PTFE mit einem Karbonfaseranteil hergestellt ist.

9. Radlager nach einem der Ansprüche 1 bis 8 **dadurch gekennzeichnet, dass** die Druckkammer (36) mit einem in einer Radnabe vorgesehenen Luftzufuhrkanal (54) und einem Reifenschlauch eines Kraftfahrzeugreifens kommuniziert, wobei die Radnabe den ersten Ring (14) ausbildet und der Luftzufuhrkanal (54) mindestens ein, insbesondere als O-Ring ausgestaltetes, Dichtelement (56) zur Abdichtung des Luftzufuhrkanals (54) gegenüber einem Luftanschluss und/oder Abdichtdeckel aufweist.

10. Radlager nach einem der Ansprüche 1 bis 9 **dadurch gekennzeichnet, dass** zwischen der Dichteinheit (24) und dem Stützring (40) eine Leckagerückführung ausgebildet ist, wobei insbesondere die Dichteinheit (24) mindestens eine axial verlaufender Leckagenut und der Stützring (40) mindestens eine mit der Leckagenut kommunizierende Ablaufnut aufweist.

## Claims

1. A wheel bearing for mounting a motor vehicle tyre of a motor vehicle, in particular a truck, having
a first ring (14), in particular designed as an inner bearing ring,
a second ring (20), in particular designed as an outer bearing ring or hub, which is rotatably mounted relative to the first ring via at least one greased rolling bearing (18),
a sealing unit (24) arranged in the radial direction between the first ring (14) and the second ring (20) for sealing the first ring (14) from the second ring (20),
a further sealing unit (26) arranged in the radial direction between the first ring (14) and the second ring (20) for sealing the first ring (14) from the second ring (20), and
a pressure chamber (36) formed in the radial direction between the first ring (14) and the second ring (20) and in the axial direction between the sealing unit (24) and the further sealing unit (26),
**characterised in that**
a support ring (40) is arranged in the axial direction between the rolling bearing (18) and the sealing unit (24) for axially supporting the sealing unit (24) at a pressure in the pressure chamber (36),
wherein the support ring (40) forms an air gap (50) between the support ring (40) and the first ring (14) or second ring (20) rotatable relative to the support ring (40), which air gap is dimensioned to retain lubricating grease from the rolling bearing (18).

2. The wheel bearing according to claim 1, **characterised in that** the support ring (40) has an, in particular essentially radial, ventilation groove (52) on the axial side facing the rolling bearing (18).

3. The wheel bearing according to claim 1 or 2, **characterised in that** the air gap (50) communicates with a ventilation channel communicating with the rolling bearing (18).

4. The wheel bearing according to any one of claims 1 to 3, **characterised in that** the first ring (14) or the second ring (20) has a shoulder (44) for receiving the support ring (40), wherein the axial extent of the shoulder (44) is greater than the axial extent of the support ring (40).

5. The wheel bearing according to any one of claims 1 to 4, **characterised in that** the support ring (40) has a projection (46) that can be stopped on the first ring (14) or second ring (20) that rotates with the support ring (40), wherein a part of the rolling bearing (18) is arranged radially offset from the projection (46) in a common axial area with the projection (46) when the projection (46) is on the first ring (14) or second ring (20) that rotates with the support ring (40).

6. The wheel bearing according to any one of claims 1 to 5, **characterised in that** the sealing unit (24) has a sealing lip (28) that can rest against a sealing surface (32) in the pressure chamber (36) under excess pressure, in particular only at an excess pressure of over 0.5 bar, wherein the sealing surface (32) is conically shaped and widens away from the pressure chamber (36).

7. The wheel bearing according to any one of claims 1 to 6, **characterised in that** the support ring (40) and the sealing unit (24) are designed to be slightly displaceable in the axial direction, in particular by 1.0 mm to 2.0 mm.

8. The wheel bearing according to any one of claims 1 to 7, **characterised in that** the sealing unit (24), in particular the sealing lip (28), is made of PTFE or PTFE with a glass fibre content or PTFE with a carbon fibre content.

9. The wheel bearing according to any one of claims 1 to 8, **characterised in that** the pressure chamber (36) communicates with an air supply channel (54) provided in a wheel hub and a tyre tube of a motor vehicle tyre, wherein the wheel hub forms the first ring (14) and the air supply channel (54) has at least one sealing element (56), in particular designed as an O-ring, for sealing the air supply channel (54) from an air connection, and/or sealing cover.

10. The wheel bearing according to any one of claims 1 to 9, **characterised in that** a leakage return is formed between the sealing unit (24) and the support ring (40), wherein in particular the sealing unit (24) has at least one axially extending leakage groove and the support ring (40) has at least one drainage groove communicating with the leakage groove.

## Revendications

1. Roulement de roue pour monter un pneu de véhicule automobile d'un véhicule automobile, en particulier d'un camion, comprenant
une première bague (14), en particulier conçue en tant que bague de roulement intérieure,
une seconde bague (20), en particulier conçue en tant que bague de roulement extérieure ou moyeu, qui est montée rotative par rapport à la première bague par l'intermédiaire d'au moins un roulement (18) graissé,
une unité d'étanchéité (24) agencée dans la direction radiale entre la première bague (14) et la seconde bague (20) pour assurer l'étanchéité de la première bague (14) par rapport à la seconde bague (20),
une autre unité d'étanchéité (26) agencée dans la direction radiale entre la première bague (14) et la seconde bague (20) pour assurer l'étanchéité de la première bague (14) par rapport à la seconde bague (20), et
une chambre de pression (36) formée dans la direction radiale entre la première bague (14) et la seconde bague (20) et dans la direction axiale entre l'unité d'étanchéité (24) et l'autre unité d'étanchéité (26),
**caractérisé en ce que**
une bague de support (40) est agencée dans la direction axiale entre le roulement (18) et l'unité d'étanchéité (24) pour supporter axialement l'unité d'étanchéité (24) à une pression dans la chambre de pression (36),
la bague de support (40) formant un espace d'air (50), qui est dimensionné pour retenir la graisse lubrifiante du roulement (18), entre la bague de support (40) d'une part et la première bague (14) ou la seconde bague (20) pouvant tourner par rapport à la bague de support (40) d'autre part.

2. Roulement de roue selon la revendication 1, **caractérisé en ce que** la bague de support (40) présente sur le côté axial tourné vers le roulement (18) une rainure de ventilation (52) s'étendant en particulier essentiellement radialement.

3. Roulement de roue selon la revendication 1 ou 2, **caractérisé en ce que** l'espace d'air (50) communique avec un canal de ventilation communiquant avec le roulement (18).

4. Roulement de roue selon l'une des revendications 1 à 3, **caractérisé en ce que** la première bague (14) ou la seconde bague (20) présente un épaulement (44) pour recevoir la bague de support (40), l'étendue axiale de l'épaulement (44) étant supérieure à l'étendue axiale de la bague de support (40).

5. Roulement de roue selon l'une des revendications 1 à 4, **caractérisé en ce que** la bague de support (40) présente une saillie (46) pouvant venir en butée contre la première bague (14) ou la seconde bague (20) tournant avec la bague de support (40), une partie du roulement (18) étant agencée radialement décalée par rapport à la saillie (46) dans une région axiale commune avec la saillie (46) lorsque la saillie (46) est appuyée sur la première bague (14) ou la seconde bague (20) tournant avec la bague de support (40).

6. Roulement de roue selon l'une des revendications 1 à 5, **caractérisé en ce que** l'unité d'étanchéité (24) présente une lèvre d'étanchéité (28) pouvant s'appuyer, sous surpression, en particulier seulement à une surpression supérieure à 0,5 bar, dans la chambre de pression (36), contre une surface d'étanchéité (32), la surface d'étanchéité (32) étant de forme conique et s'élargissant à partir de la chambre de pression (36).

7. Roulement de roue selon l'une des revendications 1 à 6, **caractérisé en ce que** la bague de support (40) et l'unité d'étanchéité (24) sont conçues de manière à pouvoir être légèrement déplacées, en particulier de 1,0 mm à 2,0 mm, dans la direction axiale.

8. Roulement de roue selon l'une des revendications 1 à 7, **caractérisé en ce que** l'unité d'étanchéité (24), en particulier la lèvre d'étanchéité (28), est fabriquée en PTFE ou en PTFE contenant une proportion de fibres de verre ou en PTFE contenant une proportion de fibres de carbone.

9. Roulement de roue selon l'une des revendications 1 à 8, **caractérisé en ce que** la chambre de pression (36) communique avec un canal (54) d'amenée d'air prévu dans un moyeu de roue et une chambre à air d'un pneu de véhicule automobile, le moyeu de roue formant la première bague (14) et le canal (54) d'amenée d'air présentant au moins un élément d'étanchéité (56), en particulier conçu sous forme de joint torique, pour assurer l'étanchéité du canal (54) d'amenée d'air par rapport à un raccord d'air et/ou un couvercle d'étanchéité.

10. Roulement de roue selon l'une des revendications 1 à 9, **caractérisé en ce qu'**un retour de fuite est formé entre l'unité d'étanchéité (24) et la bague de support (40), en particulier l'unité d'étanchéité (24) présentant au moins une rainure de fuite s'étendant axialement et la bague de support (40) présentant au moins une rainure de drainage communiquant avec la rainure de fuite.
